# EUROPEAN PATENT APPLICATION

(11) **EP 3 421 282 A1**
(43) Date of publication of application: **02.01.2019**
(21) Application number: 18179316.7
(22) Date of filing: 22.06.2018
(51) Int. Cl.: B60K 17/02, B60K 17/346, B60K 17/35, B60K 17/16, B60K 23/04, B60K 23/08, F16H 48/20

(54) **VEHICULAR POWER TRANSMISSION DEVICE**

(30) Priority: 26.06.2017 JP 2017124667
(71) Applicant: TOYOTA JIDOSHA KABUSHIKI KAISHA, Toyota-shi, Aichi-ken 471-8571 (JP)
(72) Inventor: IMAFUKU, Mizuki, Aichi-ken, 471-8571 (JP)
(74) Representative: D Young & Co LLP

(57) **Abstract**

A vehicular power transmission device includes a differential mechanism (46) including a pair of side gears (62), an inner case (54), and an outer case (44), a pair of side gear shafts (63R, 63L) respectively connected to the side gears (62) and transmitting power to a pair of wheels, a clutch mechanism (48) including a clutch hub (72), a clutch drum (70), a friction engagement element (74), and a piston (76), and an actuator (88) configured to drive the piston (76), in which the clutch hub (72) and the clutch drum (70) include meshing teeth, the piston (76) includes first meshing teeth (82) and second meshing teeth (84), and the clutch hub (72), the clutch drum (70), and the piston (76) are configured to switch an operation mode of the vehicular power transmission device to a first mode and a second mode.

## Description

### BACKGROUND OF THE INVENTION

### 1. Field of the Invention

The invention relates to a vehicular power transmission device transmitting the power that is transmitted from a power source to a pair of wheels.

### 2. Description of Related Art

A vehicular power transmission device transmitting the power that is transmitted from a power source to a pair of wheels is known. The vehicular power transmission device is provided with a clutch mechanism pressing a friction engagement element by using a piston, the clutch mechanism is provided between an outer case to which the power from the power source is transmitted and an inner case transmitting the power to a pair of side gears, and the vehicular power transmission device is provided with a mechanism adjusting the torque that is transmitted from the outer case to the inner case by using the pressing force of the piston. The power transmission device that is disclosed in Japanese Unexamined Patent Application Publication No. 2013-190076 (JP 2013-190076 A) is an example of the vehicular power transmission device. In the power transmission device that is disclosed in JP 2013-190076 A, a clutch mechanism configured to include an intermittent member 207 (friction engagement element) and a second pressing member 209 (piston) is disposed between a first rotating member 203 (outer case) and a second rotating member 205 (inner case) and the torque that is transmitted between the first rotating member 203 and the second rotating member 205 is adjusted by the pressing force of the second pressing member 209.

### SUMMARY OF THE INVENTION

The vehicular power transmission device that is disclosed in JP 2013-190076 A has a problem in that the friction engagement element slips due to a shortage of the torque capacity of the clutch mechanism and the friction engagement element burns during traveling on a rough road such as a relatively hard off-road. Although an increase in the torque capacity of the clutch mechanism is conceivable in this regard, an increase in the number of the friction materials that constitute the friction engagement element, an increase in the length of the friction material in a radial direction, or the like is needed for an increase in the torque capacity, and an increase in the size of the clutch mechanism ensues as a result.

The invention provides a vehicular power transmission device that has a mechanism which adjusts the torque transmitted from an outer case to an inner case by using a clutch mechanism and has a structure capable of preventing burning of a friction engagement element attributable to a shortage of the torque capacity of the clutch mechanism during traveling.

An aspect of the invention relates to a vehicular power transmission device including a differential mechanism, a pair of side gear shafts, a clutch mechanism, and an actuator. The differential mechanism includes a pair of side gears, an inner case, and an outer case, the inner case being configured to accommodate the side gears, the inner case being configured to transmit power to the side gears, the outer case being disposed on an outer peripheral side of the inner case, the outer case being configured to rotate relative to the inner case, and the outer case being configured such that power from a power source of a vehicle is input to the outer case. The side gear shafts are respectively connected to the side gears and transmit power to a pair of wheels. The clutch mechanism includes a clutch hub, a clutch drum, a friction engagement element, and a piston, the clutch hub being connected to the inner case, the clutch drum being connected to the outer case, the friction engagement element being disposed between the clutch hub and the clutch drum, the friction engagement element being configured such that at least one first friction plate relatively non-rotatably fitted in the clutch hub and at least one second friction plate relatively non-rotatably fitted in the clutch drum alternately overlap each other, and the piston being configured to press the friction engagement element. The actuator is configured to drive the piston. Each of the clutch hub and the clutch drum includes meshing teeth configured to relatively non-rotatably mesh with the piston, the piston includes first meshing teeth configured to mesh with the meshing teeth of the clutch hub and second meshing teeth configured to mesh with the meshing teeth of the clutch drum, and the clutch hub, the clutch drum, and the piston are configured to switch an operation mode of the vehicular power transmission device to a first mode in which torque transmitted from the outer case to the inner case is adjusted by a pressing force of the piston while the inner case and the outer case are allowed to be differential and a second mode in which the inner case and the outer case are in a non-differential state by the first meshing teeth and the meshing teeth of the clutch hub meshing with each other and the second meshing teeth and the meshing teeth of the clutch drum meshing with each other by driving the piston by using the actuator.

In the vehicular power transmission device according to the aspect of the invention, one of the side gear shafts may include meshing teeth configured to mesh with the piston, the piston may include third meshing teeth configured to mesh with the meshing teeth of the side gear shaft, and the clutch hub, the clutch drum, the piston, and the one of the side gear shafts may be configured to switch the operation mode of the vehicular power transmission device to a third mode in which the inner case and the outer case are in a non-differential state and the side gears are in a non-differential state by the first meshing teeth and the meshing teeth of the clutch hub meshing with each other, the second meshing teeth and the meshing teeth of the clutch drum meshing with each other, and the third meshing teeth and the meshing teeth of the one of the side gear shafts meshing with each other by driving the piston by using the actuator.

In the vehicular power transmission device according to the aspect of the invention, the clutch hub, the clutch drum, and the piston may be configured to switch the vehicular power transmission device to the first mode at a position where the piston presses the friction engagement element and the clutch hub, the clutch drum, and the piston may be configured to switch the vehicular power transmission device to the second mode once the piston moves to a side away from the position where the friction engagement element is pressed.

In the vehicular power transmission device according to the aspect of the invention, the clutch hub, the clutch drum, and the piston may be configured to switch the vehicular power transmission device to the first mode at a position where the piston presses the friction engagement element, the clutch hub, the clutch drum, and the piston may be configured to switch the vehicular power transmission device to the second mode once the piston moves to a side away from the position where the friction engagement element is pressed, and the clutch hub, the clutch drum, the piston, and the one of the side gear shafts may be configured to switch the vehicular power transmission device to the third mode once the piston moves to a side away from the friction engagement element beyond the position in the second mode.

In the vehicular power transmission device according to the aspect of the invention, the clutch hub, the clutch drum, and the piston may be configured such that the meshing teeth of the clutch hub and the first meshing teeth mesh with each other in a state resulting from the switching to the first mode.

In the vehicular power transmission device according to the aspect of the invention, the actuator may include an electric motor and a screw mechanism including a screw shaft member and a nut member screwed with each other and the actuator may be configured to cause one of the screw shaft member and the nut member to be driven to rotate around an axis of the side gear shaft by the electric motor and convert rotation of the electric motor to translational motion of the other one of the screw shaft member and the nut member in a direction of the axis as a result.

In the vehicular power transmission device according to the aspect of the invention, switching to the first mode and the second mode is caused by the piston being driven by the actuator being used, and thus the inner case and the outer case are locked in a mechanically non-differential state by, for example, switching to the second mode during traveling on a rough road such as a relatively hard off-road. In the above case, the torque transmitted between the inner case and the outer case is transmitted via the meshing portions of the respective meshing teeth, and thus burning attributable to a shortage of the torque capacity of the friction engagement element can be prevented.

In addition, in the vehicular power transmission device according to the aspect of the invention, the outer case and the inner case are locked in a non-differential state and the side gears are also locked in a non-differential state as a result of switching to the third mode. Accordingly, even in a case where one of the wheels is stuck in the mud during traveling on a rough road, for example, the traveling is possible by torque transmission to the other one of the wheels resulting from switching to the third mode.

In addition, in the vehicular power transmission device according to the aspect of the invention, switching to the second mode can be performed by the piston being moved to the side away from the friction engagement element from the position of the piston in the first mode where the piston presses the friction engagement element.

In addition, in the vehicular power transmission device according to the aspect of the invention, switching to the second mode can be performed by the piston being moved to the position away from the friction engagement element from the position of the piston in the first mode where the piston presses the friction engagement element. Furthermore, switching to the third mode can be performed by the piston being moved to the side away from the friction engagement element beyond the position of the piston in the second mode.

In addition, in the vehicular power transmission device according to the aspect of the invention, the first meshing teeth of the piston and the meshing teeth of the clutch hub mesh with each other in advance in the first mode. Accordingly, switching to the second mode can be completed simply by the second meshing teeth of the piston and the meshing teeth of the clutch drum meshing with each other, and thus the time that is needed for switching from the first mode to the second mode can be shortened.

In addition, in the vehicular power transmission device according to the aspect of the invention, the nut member performs translational motion in the axial direction once one of the screw shaft member and the nut member is driven to rotate by the electric motor, and thus the piston can be driven in the axial direction along with the nut member.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a skeleton diagram showing an overview of a vehicle to which the invention is applied;
FIG. 2 is a skeleton diagram for showing a configuration of a rear wheel differential device illustrated in FIG. 1;
FIG. 3 is a table showing the traveling mode-specific meshing states of meshing teeth formed in a piston;
FIG. 4 is a diagram illustrating a state at a time of switching to a front-rear differential lock mode in the rear wheel differential device illustrated in FIG. 2; and
FIG. 5 is a diagram illustrating a state at a time of switching to a front-rear-right-left differential lock mode in the rear wheel differential device illustrated in FIG. 2.

### DETAILED DESCRIPTION OF EMBODIMENTS

Hereinafter, an example of the invention will be described in detail with reference to accompanying drawings. In the following example, the drawings are appropriately simplified or modified and the dimension ratio, the shape, and so on of each portion are not always accurately drawn.

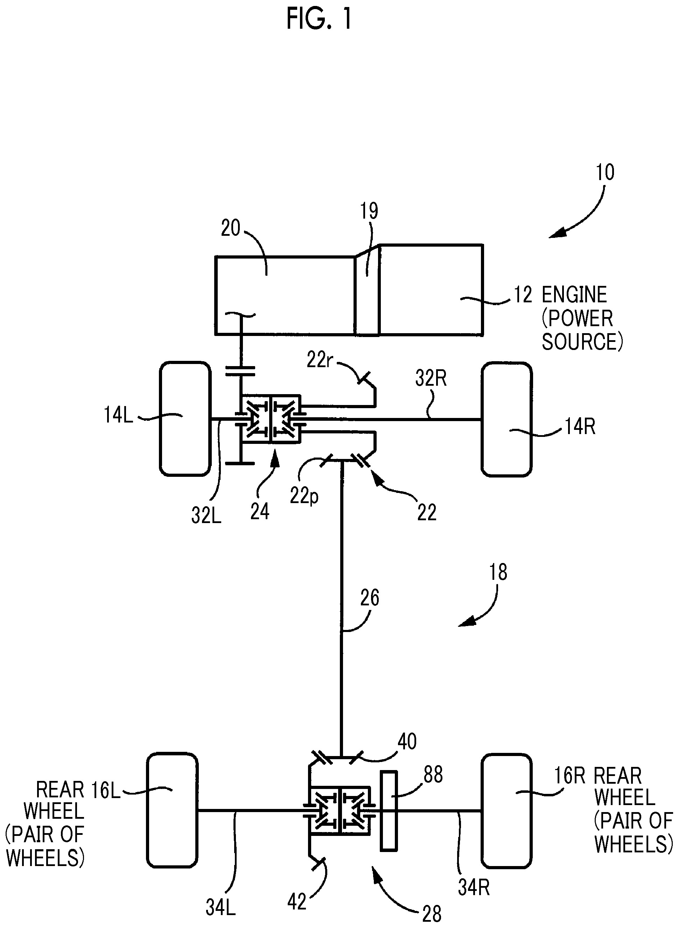

FIG. 1 is a skeleton diagram showing an overview of a vehicle 10 to which the invention is applied. The vehicle 10 is configured to include an engine 12 functioning as a power source, right and left front wheels 14R, 14L (referred to as front wheels 14 in a case where the right and left front wheels 14R, 14L are not particularly distinguished), right and left rear wheels 16R, 16L (referred to as rear wheels 16 in a case where the right and left rear wheels 16R, 16L are not particularly distinguished), and a power transmission unit 18 transmitting the power of the engine 12 to each of the front wheels 14 and the rear wheels 16. The front wheels 14 are main drive wheels that are drive wheels during two-wheel drive (2WD) traveling and four-wheel drive (4WD) traveling. The rear wheels 16 are auxiliary drive wheels that are driven wheels during 2WD traveling and drive wheels during 4WD traveling. In other words, the vehicle 10 is a four-wheel drive vehicle based on front-engine front-wheel-drive (FF). The rear wheels 16 correspond to a pair of wheels according to an aspect of the invention.

The power transmission unit 18 includes a transmission 20 (transmission) connected to the engine 12 via a torque converter 19 to be capable of performing power transmission, a transfer 22 that is a front-rear wheel power distribution device connected to the transmission 20 to be capable of performing power transmission, a front wheel differential device 24 disposed in parallel to the transfer 22, a propeller shaft 26 connected to the transfer 22 to be capable of performing power transmission, a rear wheel differential device 28 connected to the propeller shaft 26 to be capable of performing power transmission, a pair of right and left front wheel axles 32R, 32L (referred to as front wheel axles 32 in a case where the right and left front wheel axles 32R, 32L are not particularly distinguished) connecting the front wheel differential device 24 and the front wheels 14 to each other, and a pair of right and left rear wheel axles 34R, 34L (referred to as rear wheel axles 34 in a case where the right and left rear wheel axles 34R, 34L are not particularly distinguished) connecting the rear wheel differential device 28 and the rear wheels 16 to each other. The front wheel differential device 24 transmits the power from the engine 12 to the right and left front wheels 14 while allowing the differential (relative rotation) of the right and left front wheels 14. The rear wheel differential device 28 transmits the power from the engine 12 to the right and left rear wheels 16 while allowing the differential (relative rotation) of the right and left rear wheels 16.

In the power transmission unit 18 configured as described above, the power of the engine 12 is transmitted to the right and left front wheels 14 via the torque converter 19, the transmission 20, the front wheel differential device 24, and the right and left front wheel axles 32 during 2WD traveling. During 4WD traveling, some of the power of the engine 12 is transmitted to the right and left rear wheels 16 via the transfer 22, the propeller shaft 26, the rear wheel differential device 28, and the right and left rear wheel axles 34 in addition to the power transmission to the right and left front wheels 14.

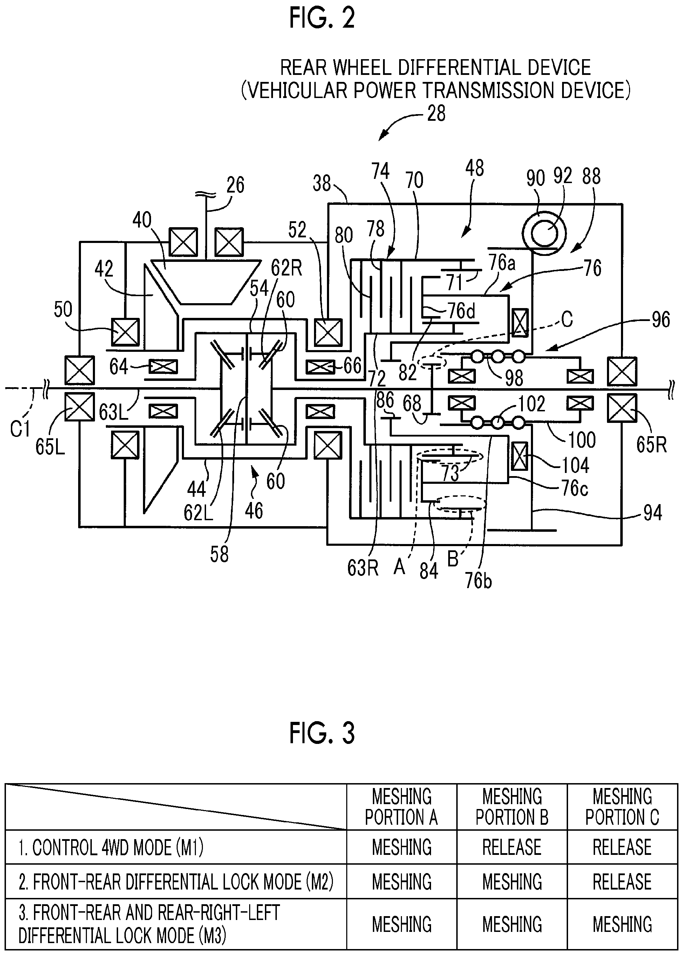

FIG. 2 is a skeleton diagram for showing an overview of the rear wheel differential device 28 illustrated in FIG. 1. The rear wheel differential device 28 corresponds to a vehicular power transmission device according to the aspect of the invention transmitting the power from the power source to the wheels.

As illustrated in FIG. 2, the rear wheel differential device 28 is disposed about a rotational axis C1 (hereinafter, referred to as an axis C1) of side gear shafts 63R, 63L (described later) connected to the rear wheel axles 34. The rear wheel differential device 28 is configured to be provided mainly with a differential mechanism 46 and a clutch mechanism 48 in a housing 38 that is a non-rotating member. The differential mechanism 46 transmits power to the rear wheel axles 34 while allowing the differential rotation of the right and left rear wheel axles 34 in response to a traveling state. The clutch mechanism 48 is disposed in parallel to the differential mechanism 46 in the axis C1 direction.

The differential mechanism 46 is configured to include an outer case 44 to which the power from the engine 12 is transmitted, a pair of right and left side gears 62R, 62L (referred to as side gears 62 in a case where the right and left side gears 62R, 62L are not particularly distinguished) transmitting power to the right and left rear wheels 16, an inner case 54 accommodating the side gears 62 and transmitting power to the side gears 62, a pinion shaft 58 that has both ends fixed to the inner case 54 in a posture orthogonal to the axis C1, and a pair of pinion gears 60 rotatably supported around the rotational axis of the pinion shaft 58 by the pinion shaft 58 penetrating the inner periphery thereof. The right and left side gears 62R, 62L are rotatably disposed around the axis C1 and mesh with the pinion gears 60, respectively.

The outer case 44 is disposed on the outer peripheral side of the inner case 54 and is rotatably supported around the axis C1 via bearings 50, 52 in the housing 38. A ring gear 42 meshing with a drive gear 40 connected to a shaft end of the propeller shaft 26 is connected to the outer case 44. The power of the engine 12 is transmitted to the outer case 44 as described above via the transmission 20, the transfer 22, the propeller shaft 26, and so on. As a result, the outer case 44 functions as an input rotating member of the rear wheel differential device 28.

The right and left side gears 62R, 62L are connected to the right and left side gear shafts 63R, 63L, respectively. By the side gear shaft 63L being connected to the rear wheel axle 34L and the side gear shaft 63R being connected to the rear wheel axle 34R, the side gear shafts 63 transmit the power that is transmitted from the side gears 62 to the right and left rear wheels 16 via the right and left rear wheel axles 34. The side gear shaft 63L is rotatably supported around the axis C1 in the housing 38 via a bearing 65L, and the side gear shaft 63R is rotatably supported around the axis C1 in the housing 38 via a bearing 65R. Outer peripheral teeth 68 for meshing with third meshing teeth 86 of a piston 76 (described later) constituting the clutch mechanism 48 are formed in the side gear shaft 63R. The outer peripheral teeth 68 correspond to the meshing teeth of the side gear shaft according to the aspect of the invention.

The inner case 54 is supported to be capable of rotating relative to the outer case 44 around the axis C1 by bearings 64, 66 disposed on the inner peripheral side of the outer case 44. In other words, the outer case 44 disposed on the outer peripheral side of the inner case 54 is disposed to be capable of rotating relative to the inner case 54. The pinion shaft 58, the pinion gears 60 rotatably fitted in the outer peripheral surface of the pinion shaft 58, and the right and left side gears 62 meshing with the pinion gears 60 are accommodated in the inner case 54. The power that is transmitted to the inner case 54 is transmitted to the right and left side gears 62R, 62L via the pinion shaft 58 and the pinion gears 60. In the above case, differential rotation is allowed between the side gear 62L and the side gear 62R by the differential action of the differential mechanism 46. The differential mechanism 46 is a known technique, and thus detailed description thereof will be omitted.

Torque is transmitted to the outer case 44 and the inner case 54 via the clutch mechanism 48. The structure of the clutch mechanism 48 will be described below. The clutch mechanism 48 is disposed about the axis C1 and has a function to adjust the magnitude of the torque that is transmitted between the outer case 44 and the inner case 54.

The clutch mechanism 48 is configured to include a clutch drum 70 connected to the outer case 44, a clutch hub 72 connected to the inner case 54, a friction engagement element 74 disposed between the clutch drum 70 and the clutch hub 72, and the piston 76 disposed at a position adjacent to the friction engagement element 74 in the axis C1 direction and pressing the friction engagement element 74.

The clutch drum 70 is a cylindrical member rotatably disposed around the axis C1 and open on the side that is away from the outer case 44 in the axis C1 direction. The clutch drum 70 is relatively non-rotatably connected to the outer case 44 via a spline fitting portion (not illustrated). Inner peripheral teeth 71 (meshing teeth) for meshing with second meshing teeth 84 (described later) of the piston 76 are formed in the inner peripheral surface of the clutch drum 70 on the side that is open in the axis C1 direction. The inner peripheral teeth 71 correspond to the meshing teeth of the clutch drum according to the aspect of the invention.

The clutch hub 72 is disposed on the inner peripheral side of the clutch drum 70. The clutch hub 72 is a cylindrical member rotatably disposed around the axis C1 and open on the side that is away from the inner case 54 in the axis C1 direction. The clutch hub 72 is relatively non-rotatably connected to the inner case 54 via a spline fitting portion (not illustrated). Outer peripheral teeth 73 (meshing teeth) for meshing with first meshing teeth 82 (described later) of the piston 76 are formed in the outer peripheral surface of the clutch hub 72 on the side that is open in the axis C1 direction. The outer peripheral teeth 73 correspond to the meshing teeth of the clutch hub according to the aspect of the invention.

The friction engagement element 74 is disposed between the clutch hub 72 and the clutch drum 70 in a radial direction. The friction engagement element 74 is configured to include a plurality of outside friction plates 78 spline-fitted in the inner peripheral surface of the clutch drum 70 relatively non-rotatably and to be relatively movable in the axis C1 direction and a plurality of inside friction plates 80 spline-fitted in the outer peripheral surface of the clutch hub 72 relatively non-rotatably and to be relatively movable in the axis C1 direction. The outside friction plates 78 and the inside friction plates 80 have a disk shape without exception and are stacked in an alternately overlapping manner. The outside friction plates 78 correspond to second friction plates according to the aspect of the invention, and the inside friction plates 80 correspond to first friction plates according to the aspect of the invention.

The piston 76 is disposed at a position adjacent to the friction engagement element 74 in the axis C1 direction and is rotatably disposed around the axis C1. The piston 76 is formed in a bottomed double cylindrical shape. Specifically, the piston 76 is provided with a cylindrical outside cylindrical portion 76a disposed between the clutch hub 72 and the clutch drum 70 in the radial direction, a cylindrical inside cylindrical portion 76b disposed on the inner peripheral side of the clutch hub 72 in the radial direction, and a wall portion 76c connecting the outside cylindrical portion 76a and the inside cylindrical portion 76b to each other. A pressing portion 76d is formed in a shaft end portion of the outside cylindrical portion 76a of the piston 76.

The end portion of the outside cylindrical portion 76a that is on the side away from the friction engagement element 74 in the axis C1 direction and the end portion of the inside cylindrical portion 76b that is on the side away from the friction engagement element 74 in the axis C1 direction are connected to each other by the wall portion 76c. The wall portion 76c has a disk shape and is disposed in a posture perpendicular to the axis C1.

The first meshing teeth 82 that are inner peripheral teeth configured to mesh with the outer peripheral teeth 73 of the clutch hub 72 are formed on the inner peripheral side of the pressing portion 76d of the piston 76. The second meshing teeth 84 that are outer peripheral teeth configured to mesh with the inner peripheral teeth 71 of the clutch drum 70 are formed on the outer peripheral side of the pressing portion 76d. The third meshing teeth 86 that are inner peripheral teeth configured to mesh with the outer peripheral teeth 68 formed in the side gear shaft 63R are formed on the side of the inside cylindrical portion 76b that is opposite to the wall portion 76c in the axis C1 direction. The second meshing teeth 84 and the third meshing teeth 86 selectively mesh with the respective corresponding meshing teeth 71, 73 in response to the position of the piston 76 in the axis C1 direction.

The piston 76 is driven, that is, moved in the axis C1 direction by an actuator 88. The actuator 88 is configured to include an electric motor 90, a worm 92 driven to rotate by the electric motor 90, a worm wheel 94 meshing with the worm 92, and a screw mechanism 96 converting the rotation of the electric motor 90 and the worm wheel 94 to translational motion in the axis C1 direction.

A brushless motor or the like constitutes the electric motor 90, and the electric motor 90 is controlled by a control device (not illustrated). The worm wheel 94 is a disk-shaped member that is rotatably disposed around the axis C1 and has an outer peripheral portion in which outer peripheral teeth meshing with the worm 92 are formed. Once the electric motor 90 rotates, the worm wheel 94 performs rotation slower than the rotation of the electric motor 90.

The screw mechanism 96 is configured to include a cylindrical nut member 98 connected to an inner peripheral end portion of the worm wheel 94, a screw shaft member 100 screwed with the nut member 98, and a plurality of balls 102 interposed between the nut member 98 and the screw shaft member 100. The screw mechanism 96 is a ball screw in which the nut member 98 and the screw shaft member 100 relatively rotate between the balls 102 and one of the members moves relative to the other member in the axis C1 direction as a result.

The screw shaft member 100 is non-rotatably fixed to the housing 38 via a connection member (not illustrated). Accordingly, once the nut member 98 is driven to rotate around the axis C1 by the rotation of the electric motor 90 being transmitted to the nut member 98 via the worm 92 and the worm wheel 94, the nut member 98 and the screw shaft member 100 relatively rotate in the screw mechanism 96, and thus the nut member 98 is moved in the axis C1 direction. By the nut member 98 being driven to rotate around the axis C1 by the electric motor 90 as described above, the rotation of the electric motor 90 is converted to the translational motion of the nut member 98 in the axis C1 direction. The dimension of the worm wheel 94 in the axis C1 direction is set such that the worm 92 and the outer peripheral teeth of the worm wheel mesh with each other at all times regardless of the position of the worm wheel 94 in the axis C1 direction.

A thrust bearing 104 is disposed between the worm wheel 94 and the wall portion 76c of the piston 76 in the axis C1 direction. Accordingly, when the worm wheel 94 moves in the axis C1 direction, the piston 76 is driven in the axis C1 direction in conjunction with the worm wheel 94 via the thrust bearing 104.

The traveling mode of the vehicle 10 is configured to switch between a plurality of operation modes (traveling modes) by the piston 76 being driven by the actuator 88 and the position of the piston 76 in the axis C1 direction being adjusted in the rear wheel differential device 28 configured as described above. Specifically, the operation modes are a control 4WD mode (M1), a front-rear differential lock mode (M2), and a front-rear and rear-right-left differential lock mode (hereinafter, a front-rear-right-left differential lock mode (M3)). In the control 4WD mode (M1), the torque transmitted between the outer case 44 and the inner case 54 is adjusted by the pressing force of the piston 76 while the inner case 54 and the outer case 44 are allowed to be differential (capable of relatively rotating). In the front-rear differential lock mode (M2), the inner case 54 and the outer case 44 are locked in a non-differential (relatively non-rotatable) state. In the front-rear-right-left differential lock mode (M3), the inner case 54 and the outer case 44 are locked in a non-differential state and the side gears 62 are locked in a non-differential (relatively non-rotatable) state. The control 4WD mode (M1) corresponds to a first mode according to the aspect of the invention, the front-rear differential lock mode (M2) corresponds to a second mode according to the aspect of the invention, and the front-rear-right-left differential lock mode (M3) corresponds to a third mode according to the aspect of the invention.

FIG. 3 shows the operation mode-specific states of meshing between the first meshing teeth 82 to third meshing teeth 86 of the piston 76 and the meshing teeth 68, 71, 73 configured to mesh respectively therewith. The meshing portion A in FIG. 3 (refer to FIG. 2) shows the state of meshing between the first meshing teeth 82 of the piston 76 and the outer peripheral teeth 73 of the clutch hub 72, "meshing" indicates that the first meshing teeth 82 and the outer peripheral teeth 73 mesh with each other, and "release" indicates a state where the state of meshing between the first meshing teeth 82 and the outer peripheral teeth 73 is released (canceled). The meshing portion B (refer to FIG. 2) shows the state of meshing between the second meshing teeth 84 of the piston 76 and the inner peripheral teeth 71 of the clutch drum 70, "meshing" indicates that the second meshing teeth 84 and the inner peripheral teeth 71 mesh with each other, and "release" indicates a state where the state of meshing between the second meshing teeth 84 and the inner peripheral teeth 71 is released (canceled). The meshing portion C (refer to FIG. 2) shows the state of meshing between the third meshing teeth 86 of the piston 76 and the outer peripheral teeth 68 of the side gear shaft 63R, "meshing" indicates that the third meshing teeth 86 and the outer peripheral teeth 68 mesh with each other, and "release" indicates a state where the state of meshing between the third meshing teeth 86 and the outer peripheral teeth 68 is released (canceled).

As illustrated in FIG. 3, the control 4WD mode (M1) is established when, for example, the first meshing teeth 82 and the outer peripheral teeth 73 corresponding to the meshing portion A mesh with each other, the state of meshing between the second meshing teeth 84 and the inner peripheral teeth 71 corresponding to the meshing portion B is released, and the state of meshing between the third meshing teeth 86 and the outer peripheral teeth 68 corresponding to the meshing portion C is released. The front-rear differential lock mode (M2) is established when the first meshing teeth 82 and the outer peripheral teeth 73 mesh with each other, the second meshing teeth 84 and the inner peripheral teeth 71 mesh with each other, and the state of meshing between the third meshing teeth 86 and the outer peripheral teeth 68 is released. The front-rear-right-left differential lock mode (M3) is established when the first meshing teeth 82 and the outer peripheral teeth 73 mesh with each other, the second meshing teeth 84 and the inner peripheral teeth 71 mesh with each other, and the third meshing teeth 86 and the outer peripheral teeth 68 mesh with each other.

FIG. 2 corresponds to the state of the control 4WD mode (M1). The worm wheel 94 and the nut member 98 are moved to the friction engagement element 74 side in the axis C1 direction, the piston 76 is also moved toward the friction engagement element 74 via the thrust bearing 104, and the friction engagement element 74 is pressed by the electric motor 90 being controlled as illustrated in FIG. 2. In the above case, a torque capacity depending on the pressing force of the piston 76 is generated in the friction engagement element 74. Accordingly, torque is transmitted from the outer case 44 to the inner case 54 via the friction engagement element 74. The control 4WD mode (M1) is an operation mode in which the torque transmitted from the outer case 44 to the inner case 54, that is, the torque transmitted to the rear wheels 16 is adjusted by the torque capacity of the friction engagement element 74 being adjusted by the pressing force of the piston 76 as described above. In a case where the piston 76 is at a position immediately preceding the pressing of the friction engagement element 74, the torque capacity of the friction engagement element 74 is zero and the torque transmission to the rear wheels 16 is blocked, and thus the traveling mode is the 2WD traveling mode. In the state of the control 4WD mode (M1) resulting from switching as illustrated in FIG. 2, the meshing portion A of the first meshing teeth 82 of the piston 76 and the outer peripheral teeth 73 of the clutch hub 72 is meshed.

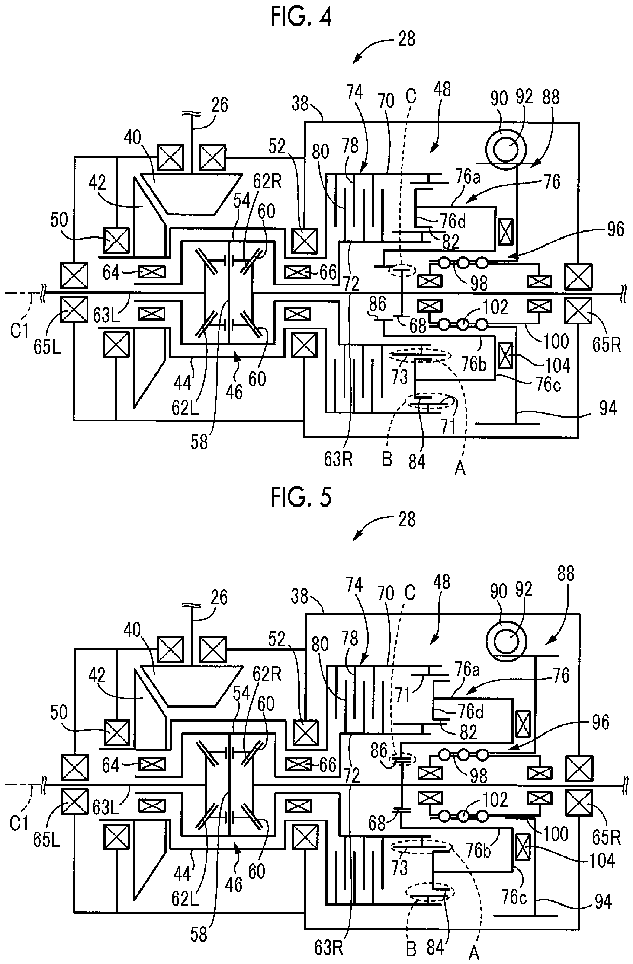

FIG. 4 corresponds to the state of the front-rear differential lock mode (M2). As illustrated in FIG. 4, in the front-rear differential lock mode (M2), the piston 76 is moved to the side that is away from the friction engagement element 74 in the axis C1 direction (bearing 65R side, right side of the page) in comparison to the control 4WD mode (M1) illustrated in FIG. 2. In the above case, the piston 76 is away from the friction engagement element 74, and thus the torque capacity of the friction engagement element 74 is zero. The meshing portion A of the first meshing teeth 82 of the piston 76 and the outer peripheral teeth 73 of the clutch hub 72 is meshed and the meshing portion B of the second meshing teeth 84 of the piston 76 and the inner peripheral teeth 71 of the clutch drum 70 is meshed. In the above case, the clutch drum 70 and the clutch hub 72 are mechanically connected to each other via the piston 76, and thus the clutch drum 70 and the clutch hub 72 rotate integrally with each other. In connection with the above, the outer case 44 connected to the clutch drum 70 and the inner case 54 connected to the clutch hub 72 are mechanically connected to each other, and thus the outer case 44 and the inner case 54 are in a non-differential (relatively non-rotatable) state in the front-rear differential lock mode (M2). In the front-rear differential lock mode (M2), 4WD traveling of direct connection is performed at a front-rear wheel torque distribution of 50:50. Switching to the front-rear differential lock mode (M2) is performed during, for example, traveling on a rough road such as a relatively hard off-road and torque needed for the traveling is transmitted to the rear wheels 16 side as well, and thus travelability on the rough road is maintained.

In the front-rear differential lock mode (M2), the clutch hub 72 is relatively non-rotatably and mechanically connected to the piston 76 by the meshing portion A being meshed and the clutch drum 70 is relatively rotatably and mechanically connected to the piston 76 by the meshing portion B being meshed, and thus the torque of the clutch drum 70 (that is, the torque of the outer case 44) is transmitted to the clutch hub 72 (that is, the inner case 54) via the meshing portion B, the piston 76, and the meshing portion A. In the above case, the piston 76 is away from the friction engagement element 74 and no torque is transmitted via the friction engagement element 74, and thus burning of the friction engagement element 74 is prevented.

FIG. 5 corresponds to the state of the front-rear-right-left differential lock mode (M3). As illustrated in FIG. 5, in the front-rear-right-left differential lock mode (M3), the piston 76 is moved to the side that is away from the friction engagement element 74 in the axis C1 direction (bearing 65R side, right side of the page) in comparison to the front-rear differential lock mode (M2) illustrated in FIG. 4. In the above case, each of the meshing portion A of the first meshing teeth 82 of the piston 76 and the outer peripheral teeth 73 of the clutch hub 72, the meshing portion B of the second meshing teeth 84 of the piston 76 and the inner peripheral teeth 71 of the clutch drum 70, and the meshing portion C of the third meshing teeth 86 of the piston 76 and the outer peripheral teeth 68 of the side gear shaft 63R is meshed. In connection with the above, the inner case 54 and the side gear shaft 63R are mechanically connected to each other by the meshing portion C being meshed in addition to the front-rear differential lock state resulting from meshing of the meshing portion A and the meshing portion B, and thus switching to a right-left differential lock state where the differential mechanism 46 is in a non-differential state occurs. Therefore, the right and left side gear shafts 63 are integrally rotated. The front-rear-right-left differential lock mode (M3) is a 4WD traveling state of direct connection and a drive force is transmitted to the right and left rear wheels 16. Therefore, in a case where one of the right and left rear wheels 16 is stuck in the mud during traveling on a rough road, for example, travelability is maintained by drive force transmission to the other rear wheel 16 resulting from switching to the front-rear-right-left differential lock mode (M3).

Switching occurs to the control 4WD mode (M1) in which the meshing portion A of the first meshing teeth 82 and the outer peripheral teeth 73 is in a meshed state at the position where the piston 76 presses the friction engagement element 74 in the rear wheel differential device 28 as illustrated in FIG. 2. Once the piston 76 moves from the position where the friction engagement element 74 is pressed to the side that is away from the friction engagement element 74 in the axis C1 direction, the meshing state of the meshing portion A is maintained and switching occurs to the front-rear differential lock mode (M2) in which the meshing portion B of the second meshing teeth 84 and the inner peripheral teeth 71 is meshed. Once the piston 76 moves to the side that is away from the friction engagement element 74 in the axis C1 direction beyond the position corresponding to the front-rear differential lock mode (M2), the meshing states of the meshing portion A and the meshing portion B are maintained and switching occurs to the front-rear-right-left differential lock mode (M3) in which the third meshing teeth 86 and the outer peripheral teeth 68 of the side gear shaft 63R mesh with each other.

Sequential meshing occurs in the order of the meshing portion A, the meshing portion B, and the meshing portion C as the piston 76 moves away (becomes farther) from the position where the friction engagement element 74 is pressed in the axis C1 direction as described above. The already meshed meshing portion is configured such that the meshing state of the meshing portion is maintained despite the movement of the piston 76 to the side away from the friction engagement element 74. Accordingly, when the operation mode of the vehicular power transmission device is switched in the order of the control 4WD mode (M1), the front-rear differential lock mode (M2), and the front-rear-right-left differential lock mode (M3), merely one meshing portion should be meshed, and thus the time that is needed for vehicular power transmission device operation mode switching can be shortened.

To realize the above, the meshing portion A to the meshing portion C are set at the positions sequentially meshing in the order of the meshing portion A, the meshing portion B, and the meshing portion C as the piston 76 moves to the side that is away from the friction engagement element 74. The outer peripheral teeth 73 constituting the meshing portion A has a dimension in the axis C1 direction set such that the outer peripheral teeth 73 mesh with the first meshing teeth 82 at all times regardless of the position of the piston 76 on the axis C1. The inner peripheral teeth 71 constituting the meshing portion B has a dimension in the axis C1 direction set such that the state of meshing between the inner peripheral teeth 71 and the second meshing teeth 84 is maintained even in the event of switching to the front-rear-right-left differential lock mode (M3) resulting from a movement of the piston 76 to the position that is away from the friction engagement element 74 from the state of the front-rear differential lock mode (M2). The outer peripheral teeth 68 constituting the meshing portion C has a dimension in the axis C1 direction set such that the outer peripheral teeth 68 mesh with the third meshing teeth 86 in the front-rear-right-left differential lock mode (M3). As a result, in this example, the dimension of the outer peripheral teeth 73 in the axis C1 direction is longer than the dimensions of the inner peripheral teeth 71 and the outer peripheral teeth 68 in the axis C1 direction, the dimension of the inner peripheral teeth 71 in the axis C1 direction is longer than the dimension of the outer peripheral teeth 68 in the axis C1 direction, and the dimension of the outer peripheral teeth 68 in the axis C1 direction is shorter than the dimensions of the outer peripheral teeth 73 and the inner peripheral teeth 71 in the axis C1 direction.

In this example, switching to the control 4WD mode (M1) and the front-rear differential lock mode (M2) is caused by the piston 76 being driven by the actuator 88 as described above, and thus the inner case 54 and the outer case 44 are locked in a mechanically non-differential state by, for example, switching to the front-rear differential lock mode (M2) during traveling on a rough road such as a relatively hard off-road. In the above case, the torque transmitted between the inner case 54 and the outer case 44 is transmitted via the meshing portions A, B, and thus burning attributable to a shortage of the torque capacity of the friction engagement element 74 can be prevented. Because of the configuration for switching to the front-rear-right-left differential lock mode (M3), the outer case 44 and the inner case 54 are locked in a non-differential state and the side gears 62 are also locked in a non-differential state as a result of switching to the front-rear-right-left differential lock mode (M3). Accordingly, even in a case where one of the right and left rear wheels 16 is stuck in the mud during traveling on a rough road, for example, the traveling is possible by torque transmission to the other one of the right and left rear wheels 16 resulting from switching to the front-rear-right-left differential lock mode (M3).

In this example, the first meshing teeth 82 of the piston 76 and the outer peripheral teeth 73 of the clutch hub 72 mesh with each other in advance in the control 4WD mode (M1). Accordingly, switching to the front-rear differential lock mode (M2) can be completed simply by the second meshing teeth 84 of the piston 76 and the inner peripheral teeth 71 of the clutch drum 70 meshing with each other, and thus the time that is needed for switching from the control 4WD mode (M1) to the front-rear differential lock mode (M2) can be shortened. Switching from the front-rear differential lock mode (M2) to the front-rear-right-left differential lock mode (M3) can be completed simply by the third meshing teeth 86 of the piston 76 and the outer peripheral teeth 68 of the side gear shaft 63R meshing with each other, and thus the time needed for switching from the front-rear differential lock mode (M2) to the front-rear-right-left differential lock mode (M3) can be shortened.

Although an example of the invention has been described in detail above with reference to accompanying drawings, the invention is also applicable in other aspects.

For example, the invention may also be implemented with the front-rear-right-left differential lock mode (M3) omitted although the front-rear-right-left differential lock mode (M3) in which the third meshing teeth 86 of the piston 76 and the outer peripheral teeth 68 of the side gear shaft 63R mesh with each other is set in addition to the control 4WD mode (M1) and the front-rear differential lock mode (M2) in the example described above. In other words, the invention may also be configured such that switching occurs to the control 4WD mode (M1) and the front-rear differential lock mode (M2).

Although the first meshing teeth 82 and the second meshing teeth 84 are formed in the pressing portion 76d of the piston 76 in the example described above, the invention is not limited thereto. For example, the first meshing teeth 82 and the second meshing teeth 84 may be formed in the outside cylindrical portion 76a of the piston 76 as well.

Although the first meshing teeth 82 of the piston 76 and the outer peripheral teeth 73 of the clutch hub 72 mesh with each other in the control 4WD mode (M1) in the example described above, the invention is not limited thereto and meshing between the second meshing teeth 84 of the piston 76 and the inner peripheral teeth 71 of the clutch drum 70 may replace the meshing between the first meshing teeth 82 and the outer peripheral teeth 73. Alternatively, the meshing states of all of the meshing teeth may be released in the control 4WD mode (M1).

Although the screw mechanism 96 is a ball screw in which the balls 102 are interposed between the nut member 98 and the screw shaft member 100 in the example described above, the balls 102 do not necessarily have to be interposed and the nut member 98 and the screw shaft member 100 may be directly screwed as well.

Although the nut member 98 is moved in the axis C1 direction by the nut member 98 being driven to rotate by the electric motor 90 in the actuator 88 in the example described above, the nut member 98 can be moved in the axis C1 direction by the screw shaft member 100 being driven to rotate by the electric motor 90 as well. The nut member 98 moves in the axis C1 direction when, for example, the screw shaft member 100 is rotated by the electric motor 90 by the nut member 98 being fitted with the housing 38 non-rotatably and to be capable of moving in the axis C1 direction.

Although the outside friction plates 78 and the inside friction plates 80 constitute the friction engagement element 74 in the example described above, a single plate may constitute either the outside friction plate 78 or the inside friction plate 80 as well.

Although the clutch mechanism 48 is disposed on the right rear wheel 16R side in the rear wheel differential device 28 in the example described above, the clutch mechanism 48 may be disposed on the left rear wheel 16L side as well.

Although the vehicle 10 is a four-wheel drive vehicle based on front-engine front-wheel-drive in the example described above, the invention is not limited thereto. For example, the invention is also applicable to a four-wheel drive vehicle based on front-engine rear-wheel-drive (FR). In the case of front-engine rear-wheel-drive, the above-described mechanism is disposed on the front wheel differential device 24 side.

Although the worm 92 and the worm wheel 94 are interposed between the electric motor 90 and the screw mechanism 96 in the example described above, the worm 92 and the worm wheel 94 do not necessarily have to be interposed and appropriate use is possible insofar as the rotation of the electric motor 90 is transmitted to the worm wheel 94, examples of which include transmission of the rotation of the electric motor 90 to the worm wheel 94 via a helical gear. Alternatively, the screw mechanism 96 may be operated directly by the electric motor 90.

Although the actuator 88 is configured to include the screw mechanism 96 converting rotational motion to translational motion in the example described above, the actuator 88 may be appropriately changed insofar as the actuator 88 drives the piston 76 in the axis C1 direction. For example, a cam mechanism may be used instead of the screw mechanism 96. The cam mechanism includes, for example, two members capable of relatively rotating and a cam interposed between the two members and is configured such that the rotational position of one of the members can be adjusted by an electric motor. In the cam mechanism, once the two members relatively rotate by one of the members being rotated by the electric motor, the two members are relatively moved in the axis C1 direction by the cam interposed between the two members. The cam mechanism as described above is also applicable to the invention as the rotational motion of the electric motor 90 is converted to translational motion.

The above description is merely an embodiment and the invention can also be implemented with various changes and improvements added thereto based on the knowledge of those skilled in the art.

## Claims

1. A vehicular power transmission device comprising:
a differential mechanism (46) including a pair of side gears (62), an inner case (54), and an outer case (44), the inner case (54) being configured to accommodate the side gears (62), the inner case (54) being configured to transmit power to the side gears (62), the outer case (44) being disposed on an outer peripheral side of the inner case (54), the outer case (44) being configured to rotate relative to the inner case (54), and the outer case (44) being configured such that power from a power source of a vehicle is input to the outer case (44);
a pair of side gear shafts (63R, 63L) respectively connected to the side gears (62) and transmitting power to a pair of wheels;
a clutch mechanism (48) including a clutch hub (72), a clutch drum (70), a friction engagement element (74), and a piston (76), the clutch hub (72) being connected to the inner case (54), the clutch drum (70) being connected to the outer case (44), the friction engagement element (74) being disposed between the clutch hub (72) and the clutch drum (70), the friction engagement element (74) being configured such that at least one first friction plate relatively non-rotatably fitted in the clutch hub (72) and at least one second friction plate relatively non-rotatably fitted in the clutch drum (70) alternately overlap each other, and the piston (76) being configured to press the friction engagement element (74); and
an actuator (88) configured to drive the piston (76), wherein:
each of the clutch hub (72) and the clutch drum (70) includes meshing teeth configured to relatively non-rotatably mesh with the piston (76);
the piston (76) includes first meshing teeth (82) configured to mesh with the meshing teeth of the clutch hub (72) and second meshing teeth (84) configured to mesh with the meshing teeth of the clutch drum (70); and
the clutch hub (72), the clutch drum (70), and the piston (76) are configured to switch an operation mode of the vehicular power transmission device to a first mode in which torque transmitted from the outer case (44) to the inner case (54) is adjusted by a pressing force of the piston (76) while the inner case (54) and the outer case (44) are allowed to be differential and a second mode in which the inner case (54) and the outer case (44) are in a non-differential state by the first meshing teeth (82) and the meshing teeth of the clutch hub (72) meshing with each other and the second meshing teeth (84) and the meshing teeth of the clutch drum (70) meshing with each other by driving the piston (76) by using the actuator (88).

2. The vehicular power transmission device according to claim 1, wherein:
one of the side gear shafts includes meshing teeth configured to mesh with the piston (76);
the piston (76) includes third meshing teeth (86) configured to mesh with the meshing teeth of the side gear shaft; and
the clutch hub (72), the clutch drum (70), the piston (76), and the one of the side gear shafts are configured to switch the operation mode of the vehicular power transmission device to a third mode in which the inner case (54) and the outer case (44) are in a non-differential state and the side gears (62) are in a non-differential state by the first meshing teeth (82) and the meshing teeth of the clutch hub (72) meshing with each other, the second meshing teeth (84) and the meshing teeth of the clutch drum (70) meshing with each other, and the third meshing teeth (86) and the meshing teeth of the one of the side gear shafts meshing with each other by driving the piston (76) by using the actuator (88).

3. The vehicular power transmission device according to claim 1 or 2, wherein:
the clutch hub (72), the clutch drum (70), and the piston (76) are configured to switch the vehicular power transmission device to the first mode at a position where the piston (76) presses the friction engagement element (74); and
the clutch hub (72), the clutch drum (70), and the piston (76) are configured to switch the vehicular power transmission device to the second mode once the piston (76) moves to a side away from the position where the friction engagement element (74) is pressed.

4. The vehicular power transmission device according to claim 2, wherein:
the clutch hub (72), the clutch drum (70), and the piston (76) are configured to switch the vehicular power transmission device to the first mode at a position where the piston (76) presses the friction engagement element (74);
the clutch hub (72), the clutch drum (70), and the piston (76) are configured to switch the vehicular power transmission device to the second mode once the piston (76) moves to a side away from the position where the friction engagement element (74) is pressed; and
the clutch hub (72), the clutch drum (70), the piston (76), and the one of the side gear shafts are configured to switch the vehicular power transmission device to the third mode once the piston (76) moves to a side away from the friction engagement element (74) beyond the position of piston in the second mode.

5. The vehicular power transmission device according to any one of claims 1 to 4, wherein the clutch hub (72), the clutch drum (70), and the piston (76) are configured such that the meshing teeth of the clutch hub (72) and the first meshing teeth (82) mesh with each other in a state resulting from the switching to the first mode.

6. The vehicular power transmission device according to any one of claims 1 to 5, wherein the actuator (88) includes an electric motor (90) and a screw mechanism (96) including a screw shaft member (100) and a nut member (98) screwed with each other and the actuator (88) is configured to cause one of the screw shaft member (100) and the nut member (98) to be driven to rotate around an axis of the side gear shaft by the electric motor (90) and convert rotation of the electric motor (90) to translational motion of the other one of the screw shaft member (100) and the nut member (98) in a direction of the axis as a result.
